# EUROPEAN PATENT SPECIFICATION

(11) **EP 0 558 436 B1**
(45) Date of publication and mention of the grant of the patent: **13.03.1996**
(21) Application number: 93610015.5
(22) Date of filing: 26.02.1993
(51) Int. Cl.: A01D 43/10, A01D 34/70, A01D 67/00

(54) **Mower for harvesting grass crops**
Mäher zum Ernten von Gras
Faucheuse pour récolter du gazon

(30) Priority: 28.02.1992 DK 256/92
(43) Date of publication of application: 01.09.1993
(73) Proprietor: JF-FABRIKEN - J. FREUDENDAHL A/S, DK-6400 Sonderborg (DK)
(72) Inventor: Freudendahl, Jorn, DK-6400 Sonderborg (DK); Nielsen, Harald Raun, DK-6470 Sydals (DK)
(74) Representative: Jessen, Ivar Bergishagen

(56) References cited:
- AT-B- 318 270
- DE-A- 3 142 594
- DE-A- 4 033 879
- US-A- 4 719 742
- US-A- 4 991 383

## Description

The invention relates to a mower for the harvesting of grass crops with driven, cutter means disposed along an axis for cutting the crop in a determined pass width, a pull rod centrally pivoted in relation to the pass width of the mower and ground wheels for towing by means of a tractor and a power transferring transmission device to be connected with a power take-off on the tractor and a shielding device rearwards facing relative to the direction of travel to define a stationary discharge opening positioned asymmetrically in relation to the pass width of the mower for throwing out cut crop discharged in swaths in a windrow with a swath width that is considerably smaller than the pass width. A mower of this type is known from DK Patent Application No. 2883/87.

Moreover, DK Patent Application No. 938/89 relates to a forage harvester with a discharge opening defined by laterally movable shielding plates, thereby allowing the discharge opening to be placed according to desire in relation to the pass width, the wheels and a pull rod of the forage harvester, angularly adjustable in relation to the direction of travel of the forage harvester, thereby imparting a tilted position to the forage harvester in relation to the direction of travel.

The purpose of the invention is to improve the efficiency of a mower of the above mentioned kind, i.e. making such a mower capable of placing cut crop still more asymmetrically in relation to the pass width of the mower in order to place two successive swaths immediately adjacent to each other.

This is obtained by means of a mower that is characterized in that the ground wheels are designed to occupy, while harvesting, a stationary position with their rotational axes in parallel relationship but tilted in the horizontal plane in relation to said axis of the cutter means, and that means are provided for controlling the throwing length of the cut crop discharged in swaths from the mower. It is thus obtained that the mower thows out cut crop obliquely in relation to the direction of travel concurrently with controlling the exact placing the swath on the ground.

In an embodiment of the invention in which the crop cut in swaths is thrown from the mower by means of a conditioner roller rotating about a horizontal axis said adjusting means comprising means for controlling the rotational rate of the conditioner roller. In a second embodiment said adjusting means comprise a guide plate mounted behind and above the discharge opening and being pivotal about an axis with a significant horizontal component.

In case of a harvester according to the invention in which the ground wheels are mounted on their individual arm hinged by mutually parallel hinge axes on a frame section of the mower to pivot in a plane substantially parallel to the direction of travel, the hinge axes in one embodiment are positioned in a vertical plane parallel to the axis of the cutter means but are tilted in said plane in relation to said axis and the arms have each individually an angularity of the same magnitude as said inclination. In a second embodiment the hinge axes are positioned in a horizontal plane but are inclined in this plane in relation to the axis of the cutter means.

The invention will now be explained in detail by examples with reference to the schematical drawings, in which
Fig. 1 illustrates harvesting by means of a mower according to the invention,
Figs 2a and 2b show a guide plate for controlling the throwing length, in two different positions,
Fig. 3 is a side view of a mower according to the invention,
Fig. 4 is a view from above of a mower according to the invention, in the operating position for harvesting,
Fig. 5 is a view from the rear of the mower in Fig. 4 in the transportation position,
Fig. 6 is a view from above of a second embodiment of a mower according to the invention, in the operating position of harvesting, and
Fig. 7 is a view from the rear of the mower in Fig. 6 in the transportation position.

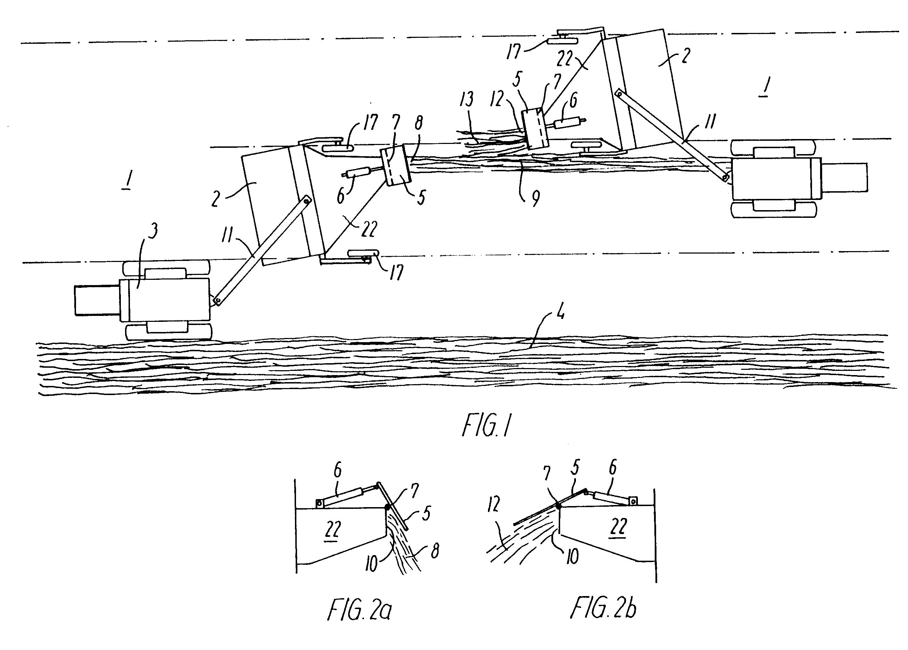

As it appears from Fig. 1 the harvesting of a crop 1 is carried out by means of a mower 2 according to the invention, towed by a tractor 3 in that the field is passed through in parallel paths alternately in one and the other direction. The tractor 3 wheeling in Fig. 1 towards the left side of the figure travels between a windrow 4 of crop cut in previous run-overs of the field and crop 1 still not harvested. The tilted mower 2 according to the described embodiment comprises a guide plate 5 which by means of a power cylinder 6 may be rotated about an axis 7. The guide plate 5 is in this case tilted to a relatively steep position, as more specifically illustrated in Fig. 2a, whereby the discharged cut crop 8 is placed in a windrow 9 just below the asymmetrically disposed discharge opening 10 of the mower, said opening being constituted by a shielding device 22. This ensures that under the following pass of the field space is provided for the ground wheels of the tractor at one side of the tractor and the mower, respectively, between the discharged windrow 9 and the crop 1 not yet cut. This pass is illustrated to the right in Fig. 1. The mower 2 is here swung on to the other side of the path of movement of the tractor 3 by means of its pull rod 11 that is centrally pivoted. The guide plate 5 of the mower 2 is in this case, as illustrated in Fig. 2b, tilted upwards into a less steep position, thereby throwing the now cut crop 12 so far that, owing to the inclined position of the mower is thrown obliquely in relation to the direction of travel of the tractor and the mower and is discharged in a windrow 13 quite adjacent the windrow 9 discharged under the previous field pass.

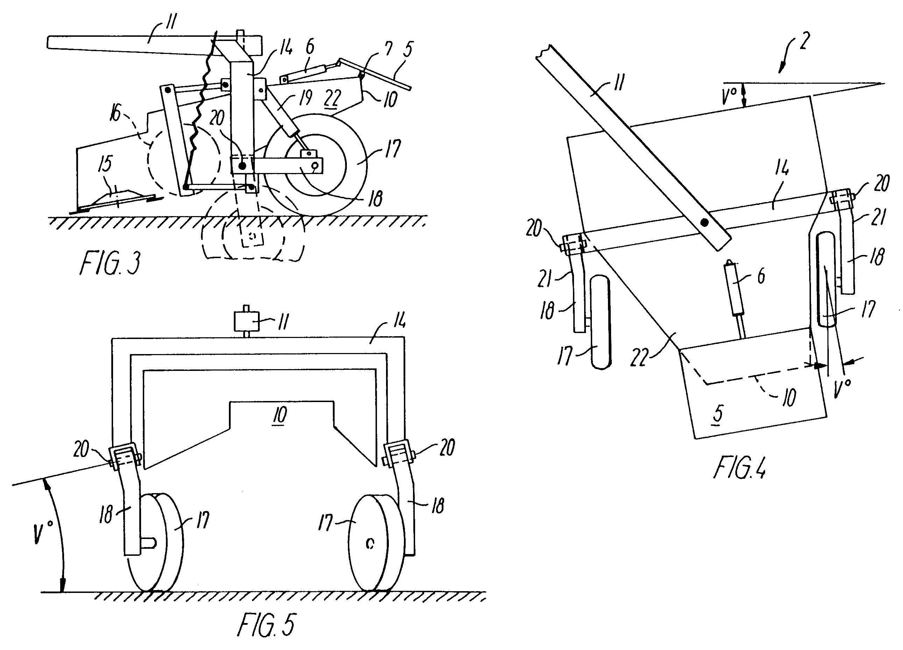

Fig. 3 is a side view of a mower according to the invention corresponding by and large to known embodiments, comprising a frame portion 14, cutter means 15, for instance in the form of knife discs, a means 16 for throwing out cut crop, e.g. in the form of a conditioner roller rotating about a horizontal axis, ground wheels 17 mounted on an arm 18 which by means of a power cylinder 19 may be rotated about an axis 20 in order to move the ground wheel from the operating position of harvesting illustrated in solid lines to the travel position illustrated in dashed lines, and vice versa. Moreover, the previously mentioned guide plate 5 is shown in Fig. 3.

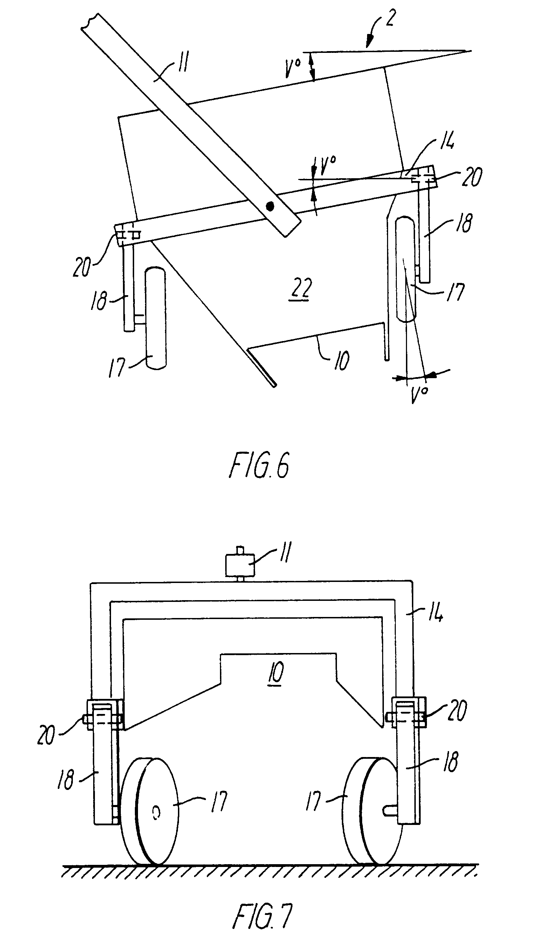

The mower shown in Fig. 3 is illustrated from above and from the rear, respectively, in Figs 4 and 5. It appears that the axes 20 for the arms 18 are mutually parallel and viewed from above, are further parallel to the transverse direction of the mower 2 represented by the longitudinal direction of the frame portion 14. The arms 18 have an angularity or a bend 21, the ground wheels 17 and thus the travel direction of the mower 2 being thereby inclined an angle V° in relation to the longitudinal direction and ordinary direction of travel of the mower 2.

As it appears from Fig. 5 the axes 20 are inclined the angle V°, whereby the ground wheels in their position of transportation are vertical. In return, they are rotated the angle V° in relation to the longitudinal direction of the mower as was the case in the operating position, but this time to the opposite side. It should be noticed that the guide plate 5 for the sake of clearness is not shown in Fig. 5.

Figs 6 and 7 illustrate a second embodiment of the mower according to the invention in which the ground wheels 17 in the operating position are tilted in relation to the longitudinal direction of the mower 2 in that the axes 20 in the horizontal plane are slanted through the angle V° in relation to the frame portion 14. This provides for obtaining the same inclination effect as in the embodiment in Fig. 4, but as it appears from Fig. 7 the mower in the position of transportation is pivoted to the same side in relation to its longitudinal direction as in the operating position in contradiction to what is shown in Figs 4 and 5.

The embodiment shown in Figs 6 and 7 has no guide plate corresponding to the guide plate 5 in the previously illustrated embodiments but may instead be provided with a conditioner roller with controllable rotational rate. A control of the throwing length of the machine of cut crop is thereby also obtained.

## Claims

1. A mower for the harvesting of grass crops with driven cutter means (15) disposed along an axis for cutting the crop in a determined pass width, a pull rod (11) centrally pivoted in relation to the pass width of the mower and ground wheels (17) for towing by means of a tractor (3) and a transferring transmission device to be connected with a power take-off on the tractor and a shielding device (22) facing rearwards in relation to the direction of travel to define a stationary discharge opening (10) positioned asymmetrically in relation to the pass width of the mower for throwing out cut crop discharged in a windrow with a swath width that is considerably smaller than the pass width, characterized in that the ground wheels (17) are designed to occupy, while harvesting, a stationary position with their rotational axes in parallel relationship but tilted in the horizontal plane in relation to said axis of the cutter means (15), and that means (5; 16) are provided for controlling the throwing length of the cut crop discharged in swaths from the mower.

2. A mower according to claim 1 in which the cut crop is discharged from the mower by means of one or more conditioner rollers (16) rotating about horizontal axes, characterized in that said adjusting means comprise means for controlling the rotational rate of the conditioner roller (16).

3. A mower according to claim 1, characterized in that said adjusting means comprise a guide plate (5) mounted behind and above the discharge opening (10) and being pivotal about an axis (7) with a significant horizontal component.

4. A mower according to claims 1 to 3 of which the ground wheels (17) are mounted on individual arms (18) which are hinged by mutually parallel hinge axes (20) on a frame section (14) of the mower to pivot in a plane substantially parallel to the direction of travel, characterized in that the hinge axes (20) are positioned in a vertical plane parallel to the axis of the cutter means (15) but are tilted in said plane in relation to said axis and that the arms (18) have each individually an angularity (21) of the same magnitude as said inclination.

5. A mower according to claims 1 to 3, in which the ground wheels (17) are mounted on individual arms (18) that are hinged with mutually parallel hinge axes (20) on a frame portion (14) of the mower for rotation in a plane substantially parallel to the direction of travel, characterized in that the hinge axes (20) are positioned in a horizontal plane but are inclined in this plane in relation to the axis of the cutter means (15).

## Patentansprüche

1. Mäher zum Ernten von Gras mit entlang einer Achse angeordneten getriebenen Schneidmitteln (15) zum Abmähen der Ernte in einer bestimmten Arbeitsbreite, mit einer im Verhältnis zur Arbeitsbreite des Mähers zentral angelenkten Zugstange (11) und Bodenrädern (17) zum Bugsieren mittels eines Traktors (3) und einer Kraftübertragenden Antriebseinrichtung zur Verbindung mit einer Zapfenwelle auf dem Traktor und einer im Verhältnis zur Fahrtrichtung rückwärts wendenden Abschirmungseinrichtung (22) zur Begrenzung einer im Verhältnis zur Arbeitsbreite des Mähers asymmetrisch angeordneten festen Auswurföffnung (10) zum Auswurf von abgeschnittenen in einer Schwade abgelegten Erntegut mit einer Breite, die wesentlich kleiner als die Arbeitsbreite ist, dadurch gekennzeichnet, daß die Bodenräder (17) derart ausgestaltet sind, daß sie während des Erntens eine stationäre Stellung mit ihren Drehachsen parallel zueinander einnehmen, aber auf waagerechter Ebene im Verhältnis zu erwähnter Achse der Schneidmittel (15) schräggestellt sind, und daß Mittel (5; 16) zur Einstellung der Wurflänge des abgeschnittenen, in Schwaden vom Mäher abgelegten Erntegutes vorgesehen sind.

2. Mäher nach Anspruch 1, worin das abgeschnittene Erntegut vom Mäher mittels einer oder mehrerer um waagerechte Achsen drehender Konditionierungswalzen (16) abgeworfen wird, dadurch gekennzeichnet, daß erwähnte Einstellungsmittel Mittel zur Einstellung der Drehgeschwindigkeit der Konditionierungswalze (16) umfaßen.

3. Mäher nach Anspruch 1, dadurch gekennzeichnet, daß erwähnte Einstellungsmittel ein Leitblech (5) umfaßen, das hinter und über der Auswurföffnung (10) montiert und um eine Achse (7) mit einer wesentlichen waagerechten Komposante drehbar ist.

4. Mäher nach den Ansprüchen 1-3, wo die Bodenräder (17) auf separaten Armen (18) montiert sind, die über zueinander parallele Scharnierachsen (20) auf einem Rahmenteil (14) des Mähers gelenkig verbunden sind, um in einer zur Fahrtrichtung hauptsachlich parallelen Ebene zu drehen, dadurch gekennzeichnet, daß die Scharnierachsen (20) in einer senkrechten, zur Achse der Schneidmittel (15) parallelen Ebene angeordnet sind, aber in erwähnter Ebene im Verhältnis zu erwähnter Achse schräggestellt sind, und daß die Arme (18) je eine Winkelung (21) von derselben Größe wie erwähnte Neigung aufweisen.

5. Mäher nach den Ansprüchen 1-3, wo die Bodenräder (17) auf separaten Armen (18) montiert sind, die über zueinander parallele Scharnierachsen (20) auf einem Rahmenteil (14) des Mähers gelenkig verbunden sind, um in einer zur Fahrtrichtung hauptsächlich parallelen Ebene zu drehen, dadurch gekennzeichnet, daß die Scharnierachsen (20) in einer waagerechten Ebene angeordnet sind, aber in dieser Ebene im Verhältnis zur Achse der Schneidmittel (15) geneigt sind.

## Revendications

1. Faucheuse pour récolte de gazon avec organes de coupe commandés (15), disposés le long d'un arbre, pour faucher la récolte sur une passe de largeur donnée, une barre de traction (11) articulée en position centrale par rapport à la largeur de passe de la faucheuse, des roues porteuses au sol (17) pour remorquage à l'aide d'un tracteur (3), et un dispositif de transmission à relier à une prise de force sur le tracteur, et un dispositif à écran (22) orienté vers l'arrière par rapport au sens de déplacement, pour définir une ouverture stationnaire de décharge (10) placée de façon asymétrique par rapport à la largeur de passe de la faucheuse, pour rejeter la récolte fauchée en un andain de largeur considérablement inférieure à la largeur de passe, caractérisée par le fait que les roues porteuses (17) dont disposées pour, durant le fauchage, occuper une position stationnaire avec leurs axes de rotation mutuellement parallèles, mais inclinés dans le plan horizontal par rapport audit arbre des organes de coupe (15), et par le fait que des moyens (5; 16) sont prévus pour contrôler la longueur de rejet de la récolte fauchée déchargée en andains, à partir de la faucheuse.

2. Faucheuse selon la revendication 1, dans laquelle la récolte fauchée est déchargée de la faucheuse à l'aide d'un ou plusieurs rouleaux de conditionnement (16) rotatifs autour d'axes horizontaux, caractérisée par le fait que lesdits moyens de réglage comprennent des moyens de commande de la vitesse de rotation du rouleau de conditionnement (16).

3. Faucheuse selon la revendication 1, caractérisée par le fait que lesdits moyens de réglage comprennent une plaque de guidage (5) montée derrière et au dessus de l'ouverture de décharge (10) et pivotable autour d'un axe (7) avec une composante horizontale importante.

4. Faucheuse selon les revendications 1 à 3, et dont les roues porteuses (17) sont montées sur des bras individuels (18) qui sont articulés sur des axes mutuellement parallèles d'articulation (20) sur une section de châssis (14) de la faucheuse, pour pivoter dans un plan essentiellement parallèle au sens de déplacement, caractérisée par le fait que les axes d'articulation (20) sont situés dans un plan vertical parallèle à l'arbre des organes de coupe (15), mais inclinés dans ledit plan par rapport audit arbre, et par le fait que les bras (18) présentent chacun une conformation angulaire de même grandeur que ladite inclinaison.

5. Faucheuse selon les revendications 1 à 3, dans laquelle les roues porteuses (17) sont montées sur des bras individuels (18) qui par des axes mutuellement parallèles d'articulation (20) sont articulés sur une section de châssis (14) de la faucheuse, pour rotation dans un plan essentiellement au sens de déplacement, caractérisée par le fait que les axes d'articulation (20) sont situés dans un plan horizontal, mais sont inclinés dans ce plan par rapport à l'arbre des organes de coupe (15).
